(19) Europäisches Patentamt
European Patent Office
Office européen des brevets

(11) **EP 4 407 276 A1**

(12) **EUROPEAN PATENT APPLICATION**
published in accordance with Art. 153(4) EPC

(43) Date of publication:
**31.07.2024 Bulletin 2024/31**

(21) Application number: 23753184.3

(22) Date of filing: **09.02.2023**

(51) International Patent Classification (IPC):
*G01B 11/25* (2006.01)    *G01B 11/02* (2006.01)
*G06T 7/50* (2017.01)    *G06T 7/90* (2017.01)
*G06T 17/30* (2006.01)

(52) Cooperative Patent Classification (CPC):
**G01B 11/02; G01B 11/25; G06T 7/50; G06T 7/90; G06T 17/30**

(86) International application number:
**PCT/KR2023/001925**

(87) International publication number:
**WO 2023/153837 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.02.2022 KR 20220017271**

(71) Applicant: **Korea Advanced Institute of Science and Technology**
**Daejeon 34141 (KR)**

(72) Inventors:
• **KIM, Min Hyuk**
  **Daejeon 34141 (KR)**
• **HA, Hyunho**
  **Daejeon 34141 (KR)**

(74) Representative: **Boco IP Oy Ab**
**Kansakoulukatu 3**
**00100 Helsinki (FI)**

(54) **HIGH-RESOLUTION THREE-DIMENSIONAL SCANNING METHOD AND SYSTEM USING REAL-TIME ACQUISITION OF SURFACE NORMALS**

(57)     Disclosed is a high-resolution three-dimensional (3D) scanning method and system that may acquire high-detail geometry by connecting a volumetric fusion and multiview shape-from-shaping (SfS) in two stages and may include estimating an illumination and acquiring a scalar depth value; estimating a photometric normal and a diffuse albedo using the scalar depth value acquired from the estimated illumination; and integrating the scalar depth value to a volumetric distance field, refining the photometric normal and the diffuse albedo, and blending the photometric normal and the diffuse albedo in a texture space.

**FIG. 1**

Start

Estimate illumination and acquire scalar depth value — S110

Estimate photometric normal and diffuse albedo using scalar depth value acquired from estimated illumination — S120

Integrate scalar depth value to volumetric distance filed, refine photometric normal and diffuse albedo, and blend photometric normal and diffuse albedo in texture space — S130

End

**Description**

[Technical Field]

The following description of example embodiments relates to a high-resolution three-dimensional (3D) scanning method and system using real-time acquisition of surface normals, and more particularly, to real-time scanning technology that may acquire high-detail geometry by connecting a volumetric fusion and multiview shape-from-shaping (SfS) in two stages.

[Background Art]

Shape-from-shading (SfS) has been commonly used to enhance geometric details in three-dimensional (3D) scanning. When surface reflectance and illumination are known, SfS factorizes reflected irradiance of camera signals to photometric normals in a camera resolution. When a high-resolution camera is used, the geometry quality may be improved significantly by combining base geometry and normals. However, when reflectance and illumination are unavailable, SfS may become a very ill-posed problem. Multiview SfS estimates distribution of illumination and albedo using a multiview input and then acquires high-detail normals. The geometry quality of such a multiview SfS method is significantly higher than that of a real-time scanning method using a conventional RGB-D camera. However, when a camera is unstructured and scenes are uncontrolled, the multiview SfS becomes highly underdetermined. Therefore, the ill-poised multiview SfS problem needs to be solved by expensive nonlinear optimization with strong assumption of scene and lighting conditions in addition to a multiview registration

Despite the strong benefits of multiview SfS to high-resolution geometry, it has been hardly achieved in real-time RGB-D scanning due to some challenges.

First, multiview color and depth frames need to be registered by iterative closest point (ICP) in general. However, a perfect geometric registration is theoretically impossible with a real system due to noise in depth frames, which results in blurry reconstruction.

Second, to handle noise and inaccurate registration of depth information, a truncated signed distance function (TSDF) of a depth map has been accumulated in a canonical space. However, a TSDF-based algorithm introduces an inevitable tradeoff between a spatial resolution of geometry and a real-time performance. A hashing technique was used to mitigate the tradeoff by reducing a memory footprint, but still, details of geometry often need to be comprised for performance.

To mitigate the aforementioned challenges, the present disclosure proposes a real-time scanning method that may acquire high-detail geometry by integrating two techniques, a volumetric fusion and multiview SfS, through geometry-aware texture mapping.

Non-patent document includes Thabo Beeler, Derek Bradley, Henning Zimmer, and Markus Gross. Improved reconstruction of deforming surfaces by cancelling ambient occlusion. In European Conference on Computer Vision, pages 30-43. Springer, 2012.

[Disclosure]

[Technical Problem]

Example embodiments provide real-time scanning technology that may acquire high-detail geometry by connecting a volumetric fusion and multiview shape-from-shaping (SfS) in two stages.

Example embodiments provide a real-time acquisition method of photometric normals that may acquire a fine level of geometry stored in a high-resolution texture space and a geometry-aware texture mapping method that may progressively refine a geometric registration between a texture space and a canonical space of a truncated signed distance function (TSDF) to solve multiview SfS with high accuracy.

Here, the technical subjects to be solved herein are not limited to the above subjects and may variously expand without departing from the technical spirit and scope of the invention.

[Technical Solution]

According to an aspect, there is provided a three-dimensional (3D) scanning method for acquiring high-detail geometry by integrating a volumetric fusion and multiview shape-from-shaping (SfS), the 3D scanning method including estimating an illumination and acquiring a scalar depth value; estimating a photometric normal and a diffuse albedo using the scalar depth value acquired from the estimated illumination; and integrating the scalar depth value to a volumetric distance field, refining the photometric normal and the diffuse albedo, and blending the photometric normal and the diffuse albedo in a texture space.

According to another aspect, there is provided a 3D scanning method for acquiring high-detail geometry by integrating a volumetric fusion and multiview SfS, the 3D scanning method including estimating an illumination and acquiring a scalar depth value; estimating a photometric normal and a diffuse albedo using the scalar depth value acquired from the estimated illumination; integrating the scalar depth value to a volumetric distance field; and performing real-time multiview SfS on the photometric normal and the diffuse albedo through a geometry registration between a texture space and the volumetric distance field using a normal texture.

According to still another aspect, there is provided a 3D scanning system for acquiring high-detail geometry by integrating a volumetric fusion and multiview SfS, the 3D scanning system including an acquisition unit configured to estimate an illumination and to acquire a scalar depth value; an estimator configured to estimate a photometric normal and a diffuse albedo using the scalar depth value acquired from the estimated illumination; and a processor configured to integrate the scalar depth value to a volumetric distance field, to refine the photometric normal and the diffuse albedo, and to blend the photometric normal and the diffuse albedo in a texture space.

[Advantageous Effects]

According to some example embodiments, it is possible to acquire high-detail geometry by connecting volumetric fusion and multiview SfS in two stages.

According to some example embodiments, it is possible to acquire high-detail geometry with photometric normals and albedo texture with high resolution using a conventional RGB-D camera. In particular, it is possible to represent the geometry quality that is strongly competitive with that of an offline multiview SfS method.

Here, the effects of the invention are not limited to the above effects and may variously expand without departing from the technical spirit and scope of the invention.

Further areas of applicability will become apparent from the description provided herein. The description and specific examples in this summary are intended for purposes of illustration only and are not intended to limit the scope of the present disclosure.

[Description of Drawings]

FIG. 1 is a flowchart illustrating a three-dimensional (3D) scanning method according to an example embodiment;
FIG. 2 illustrates the overview of three main stages of an online normal fusion according to an example embodiment;
FIG. 3 illustrates the overview of optimizing normal and albedo texture according to an example embodiment;
FIG. 4 illustrates results of a fusion method according to an example embodiment and a conventional fusion method; and
FIG. 5 is a diagram illustrating a configuration of a 3D scanning system according to an example embodiment.

[Best Mode]

Aspects and features of the present invention and methods for achieving the same will become apparent with reference to the following example embodiments described in conjunction with the accompanying drawings. However, the present invention is not limited to the example embodiments and may be implemented in various forms. The example embodiments are merely provided to make the disclosure of the present invention complete and to completely inform one of ordinary skill in the art to which the present invention pertains of the scope of the present invention. The present invention is only defined by the scope of the claims.

The terminology used herein is for the purpose of describing example embodiments only and is not to be limiting of the example embodiments. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, the example embodiments are described with reference to the accompanying drawings. Here, like reference numerals refer to like elements throughout and a repeated description related thereto is omitted.

The example embodiments relate to real-time scanning technology that may acquire high-detail geometry by connecting volumetric fusion and multiview shape-from-shading (SfS) in two stages. Therefore, high-resolution three-dimensional (3D) geometry and texture may be acquired from RGB-D stream data.

Although multiview SfS has achieved high-detail geometry, a high computation cost is required for solving a multiview registration and an ill-posed inverse rendering problem. Therefore, the multiview SfS has been mainly used for offline methods. Also, a volumetric fusion enables real-time scanning using a conventional RGB-D camera, but its geometry resolution has been limited by a grid resolution of a volumetric distance field and a depth registration error.

To overcome such limitations, the present invention is to acquire high-detail geometry by connecting a volumetric fusion and multiview SfS in two stages. In detail, the present invention proposes a first real-time acquisition of photometric normals stored in a texture space to achieve high-detail geometry. Also, the present invention introduces geometry-aware texture mapping that progressively refines a geometric registration between a texture space and a volumetric distance field using a normal texture. Therefore, the present invention demonstrates scanning of high-detail geometry using an RGB-D camera at ~20fps and shows that the geometry quality of a method proposed herein is strongly competitive with the geometry quality of an offline multiview SfS method.

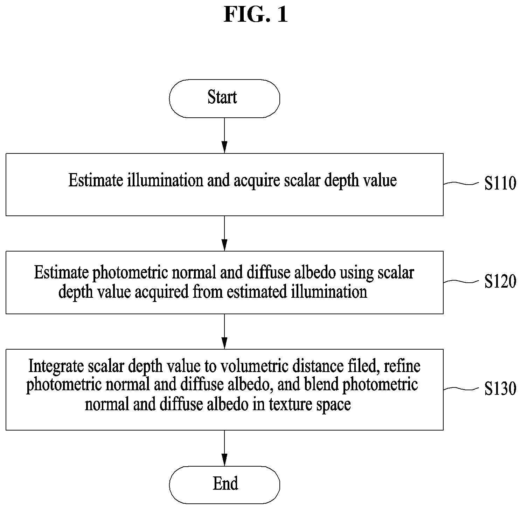

Hereinafter, the present invention is described with reference to FIGS. 1 to 5.

Prior to describing a high-resolution 3D scanning method and system using real-time acquisition of surface normals according to example embodiments, studies on online 3D representation, online geometry enhancement, and offline geometry enhancement related to the present invention are described.

Online 3D representation

A real-time 3D scanning method accumulates a truncated signed distance function (TSDF) of a depth map in a canonical space. Since a depth frame is available in real time, a camera pose for each frame is estimated by iterative closest point (ICP). In an existing real-time method, a spatial resolution of reconstructed geometry is still determined by a voxel grid resolution. While a voxel hashing data structure may improve memory efficiency, a geometry resolution still needs to be degraded for real-time performance.

Traditionally, appearance attributes have been stored in a volumetric voxel grid. A camera pose is estimated by depth information and used to back-project captured color information to a voxel grid. However, color and depth frames are asynchronously captured. Therefore, accumulated color information tends to be blurred in a real-time method. Also, like geometry information, color information has been generally stored in the voxel grid, which causes the aforementioned tradeoff between a resolution and a performance even applied for texture information. Recently, a tile texture atlas on a volumetric distance field has been proposed to enhance a color texture, ensuring the quality of texture more detailed than geometry and finds out a photometric correspondence and registers a current input frame to an existing texture space. However, it focuses on texture alignment only and decouples a geometric registration from texture mapping, which results in misalignment between the texture and the geometry. Therefore, the present invention is to achieve a high-accuracy registration between baseline geometry and the texture space through photometric normals stored in the texture space.

Online geometry enhancement

The quality of a depth frame of a conventional RGB-D camera is lower than that of a color frame in terms of a spatial resolution and noise. Also, a noise level of the depth frame is significantly higher than that of the color frame. To mitigate such a problem, a probabilistic uncertainty model of depth measurement is proposed to improve alignment of a depth camera and fused geometry. Using high-quality RGB data, some shading-based geometric refinement techniques are proposed for real-time scanning by formulating an SfS problem in a single view to refine a depth image. While such methods have improved the geometry quality clearly, the improved geometric information is still accumulated in a volumetric distance field and inherits tradeoff between a resolution and a performance. Also, an existing real-time shading-based method does not consider the geometric misalignment of multiview frames when computing inverse rendering. Therefore, the present invention proposes a first real-time scanning method that may acquire photometric normals in real time and may achieve high-quality geometry scanning by combining baseline geometry and high-resolution normals.

Offline geometry enhancement

When surface reflectance and illumination are known, shape information may be decomposed from a captured image and it is called shape-from-shading. A multiview SfS method is proposed to enhance details of geometry using a multiview input. The multiview SfS method acquires baseline geometry using a multiview stereo and refines the baseline geometry later with a shading signal through inverse rendering. However, as reflectance and illumination are unknown, an inverse rendering problem is formatted with strong assumption on scene and lighting conditions in addition to a multiview registration. Also, to solve nonlinear optimization, a computational time significantly increases even with a moderate resolution of geometry. Therefore, the multiview SfS method may not apply to real-time scanning. Also, to mitigate an ill-posed location of the inverse rendering problem in an uncontrolled scene, multiview SfS has been applied to a multiscale voxel grid structure of a TSDF in an offline scanning method. However, offline optimization of a camera pose, per-voxel color, and geometry is still required due to inaccurate depth information acquired from an RGB-D camera. In contrast, the present invention is to reconstruct multiview SfS using geometry-aware texture mapping that registers texture and normals from inverse rendering to a volumetric distance field with high accuracy.

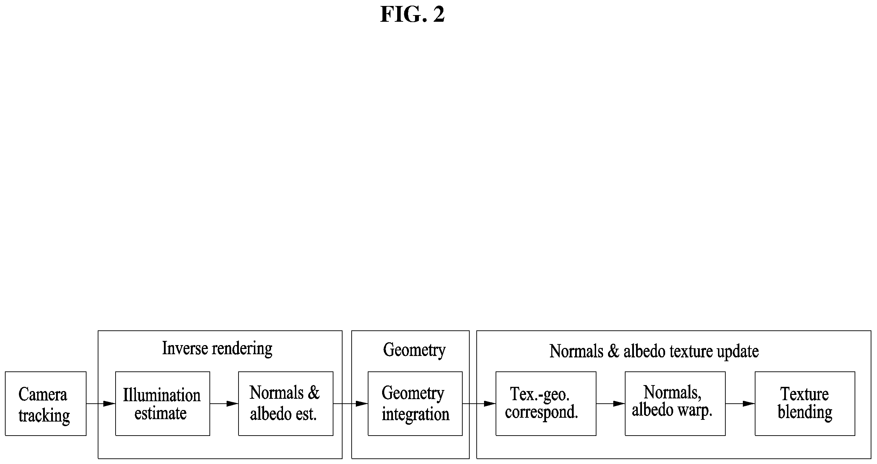

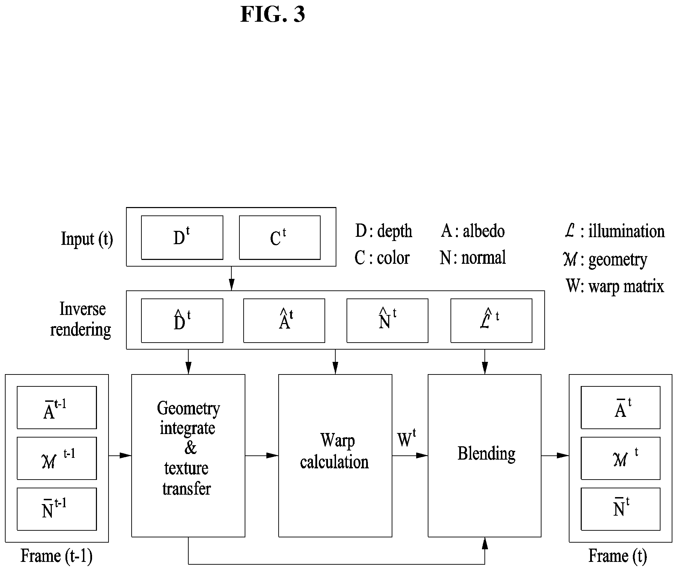

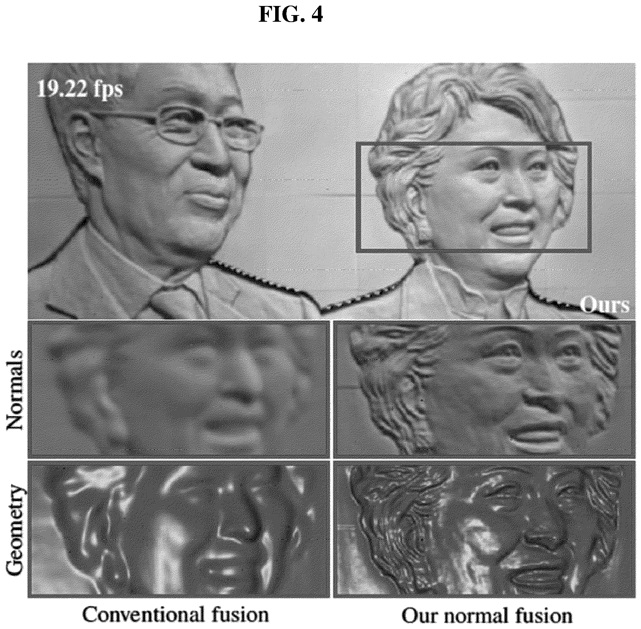

FIG. 1 is a flowchart illustrating a 3D scanning method according to an example embodiment. FIG. 2 illustrates the overview of three main stages of an online normal fusion according to an example embodiment and FIG. 3 illustrates the overview of optimizing normal and albedo texture according to an example embodiment. Also, FIG. 4 illustrates results of a fusion method according to an example embodiment and a conventional fusion method.

A 3D scanning method according to an example embodiment may acquire high-resolution 3D geometry and texture from RGB-D stream data by performing a process of acquiring high-detail geometry through integration of a volumetric fusion and multiview SfS in real time.

Referring to FIG. 2, real-time RGB-D scanning includes three main stages. First, in an inverse rendering stage, an unknown illumination may be estimated as a spherical harmonics coefficient and a photometric normal and a diffuse albedo may be acquired using multiview SfS. Second, in a geometry stage, depths are integrated to a volumetric distance field. Third, in a texture update stage using the photometric normal and the diffuse albedo, the photometric normal and the diffuse albedo are refined in real time through geometry-aware texture warping and blended in a texture space.

That is, after camera tracking, the illumination may be estimated and the photometric normal and the diffuse albedo may be estimated through inverse rendering, the geometry may be integrated and then the photometric normal and the diffuse albedo may be refined and blended in the texture space.

Hereinafter, the aforementioned three main stages are described with reference to FIG. 1. Referring to FIG. 1, an illumination is estimated and a scalar depth value is acquired in operation S110, and a photometric normal and a diffuse albedo are estimated using the scalar depth value acquired from the estimated illumination (first stage).

In operations S110 and S120, the unknown illumination may be estimated using a spherical harmonics coefficient and the photometric normal and the diffuse albedo may be estimated using multiview SfS. In detail, in operation S110, under the unknown illumination, color and depth streams may be acquired as an input using an RGB-D camera and an approximate value to the illumination may be estimated using the spherical harmonics coefficient. Therefore, in operation S120, the photometric normal and the diffuse albedo may be estimated through iterative optimization.

Also, in operation S120, the photometric normal may be estimated by optimizing a depth value and the depth value and the diffuse albedo may be optimized by minimizing an energy function.

Describing the illumination estimation through operation S110, the present invention acquires color and depth streams as an input using the RGB-D camera under the unknown illumination. Based on a diffuse surface assumption, the present invention approximates an unknown incident environment illumination using nine basis functions up to 2nd order spherical harmonics. Based on this simplification, reflected irradiance B may be formulated as a function of diffuse albedo a, surface normal n at pixel u=(i,j), incident illumination, as follows:

$$[\text{Equation 1}]$$

$$B(\mathbf{u}) = \mathbf{a}(\mathbf{u}) \sum_{k=0}^{8} l_k H_k(\mathbf{n}(\mathbf{u}))$$

In Equation 1, $H_k$ denotes a spherical harmonics basis function and $1_k$ denotes a spherical harmonics coefficient of the incident illumination.

The present invention optimizes spherical coefficient set $L^t$ at frame t by solving energy function

$$E(\mathcal{L}^t) = E_{\text{ldata}} + \lambda_{\text{ltemp}} E_{\text{ltemp}}.$$

Here, $E_{\text{ldata}}$ denotes shading, $E_{\text{ltemp}}$ denotes a temporal illumination regularizer, and $\lambda_{\text{ltemp}}$ denotes a corresponding weight thereof.

Herein, shading $E_{\text{ldata}}$ minimizes a difference between a rendered image of diffuse reflected irradiance $B^t$ and input color image $C^t$ at frame t as follows:

[Equation 2]

$$E_{\text{ldata}} = \sum\nolimits_{\mathbf{u} \in \mathcal{U}_c^t} ||Y(B^t(\mathbf{u})) - Y(C^t(\mathbf{u}))||^2$$

In Equation 2, $\mathcal{U}_c^t$ denotes a set of valid pixels in a current color/depth frame and Y denotes a luminance function that converts a color value to a luminance intensity value. Solving a spherical harmonics coefficient of illumination is an overdetermined problem, which is solved by least-squares. Also, the illumination is assumed to be consistent over time. The temporal regularizer of illumination $E_{\text{ltemp}}$ is set to force a current light parameter similar to a previously estimated light parameter. That is,

$$E_{\text{ltemp}} = \sum\nolimits_{k=0}^{8} ||l_k^t - \bar{l}_k^{t-1}||^2 .$$

Also, describing the normal and albedo estimation through operation S120, factorizing a normal and an albedo from reflected irradiance is an ill-posed nonlinear problem, which needs to be solved through iterative optimization. To reduce complexity, the present invention optimizes not a normal but a scalar depth value since an additional conversion operation of converting a normal to a depth value is required. Attention needs to be paid to an aspect that the normal may be estimated from the depth value by computing finite differences over neighboring pixels.

To optimize two unknown variables, depth $\hat{D}$ and albedo a, the energy function is minimized from as follows:

[Equation 3]

$$E(\hat{D}, \mathbf{a}) = E_{\text{data}} + \lambda_{\text{dreg}} E_{\text{dreg}} + \lambda_{\text{dsensor}} E_{\text{dsensor}}$$
$$+ \lambda_{\text{areg}} E_{\text{areg}} + \lambda_{\text{atemp}} E_{\text{atemp}}$$

In Equation 3, $E_{\text{data}}$ denotes shading data, $E_{\text{dreg}}$ denotes a spatial regularization, and $E_{\text{dsensor}}$ denotes a depth constraint. Also, $\lambda_{\text{dreg}}$ and $\lambda_{\text{dsensor}}$ denote corresponding weights for depth regularization and constraint, respectively, $E_{\text{areg}}$ and $E_{\text{atemp}}$ denote spatial and temporal regularizers of albedo, respectively, and $\lambda_{\text{areg}}$ and $\lambda_{\text{atemp}}$ denote corresponding weights for albedo regularizers, respectively.

Herein, $E_{\text{data}}$ forces the reflected irradiance to be the same as color observation using Equation 1, as follows:

[Equation 4]

$$E_{\text{data}} = \sum\nolimits_{\mathbf{u} \in \mathcal{U}_c^t} ||B^t(\mathbf{u}) - C^t(\mathbf{u})||^2$$

As generally observed in an existing SfS method, it is difficult to differentiate the impact of shading and reflectance from observation of single view shading. There is a potential risk that the diffuse albedo may be imprinted to the optimized surface normal.

Therefore, the present invention designs two regularization terms to prevent texture copy artifacts on normals. $E_{\text{dreg}}$ forces the depth value to be spatially regularized using Laplacian smoothness and may be represented as follows:

[Equation 5]

$$E_{\text{dreg}} = \sum_{\mathbf{u} \in \mathcal{U}_{\mathbf{c}}^{\mathbf{t}}} \left\| \nabla^2 \hat{D}^t(\mathbf{u}) \right\|^2$$

In Equation 5, $\nabla^2$ denotes a Laplacian operator that applies a current depth value similar to an average value of depth values of neighboring pixels.

Therefore, $E_{\text{dsensor}}$ ensures that the optimized depth $\hat{D}^t$ does not deviate too much from the input depth image

$$E_{\text{dsensor}} = \sum_{\mathbf{u} \in \mathcal{U}_{\mathbf{c}}^{\mathbf{t}}} \left\| \hat{D}^t(\mathbf{u}) - D^t(\mathbf{u}) \right\|^2 .$$

In contrast to Laplacian smoothness of depth, $E_{\text{areg}}$ assigns an albedo to be similar to its neighboring pixel and is represented as follows:

[Equation 6]

$$E_{\text{areg}} = \sum_{\mathbf{u} \in \mathcal{U}_c^t} \sum_{\mathbf{z} \in \mathcal{N}_{\mathbf{u}}} \phi(\Gamma^t(\mathbf{u}) - \Gamma^t(\mathbf{z})) \left\| \mathbf{a}^t(\mathbf{u}) - \mathbf{a}^t(\mathbf{z}) \right\|^2$$

In Equation 6, $N_u$ denotes a set of neighbors of pixel u, $\Gamma^t(u) = C^t(u)/ Y (C^t(u))$ denotes chromaticity at the pixel u, and $\phi(q) = 1/(1 + b\|q\|)^3$ denotes a robust kernel function with a predefined parameter b to prevent texture blurriness with chromaticity outlier. Here, b=5 is set for all results.

$E_{\text{atemp}}$ denotes a temporal regularization term that makes a current albedo similar to an albedo optimized in a previous frame. It prevents an albedo value from overfitting by data over time, enforcing temporal smoothness. Here,

$$E_{\text{atemp}} = \sum_{\mathbf{u} \in \mathcal{U}_c^t \cap \mathcal{U}_s^{t-1}} \left\| \mathbf{a}^t(\mathbf{u}) - \mathbf{a}^{t-1}(\mathbf{u}) \right\|^2 .$$ Here, $\mathcal{U}_s^{t-1}$ denotes a set of valid pixels in a previous frame canonical mesh rendered using a current camera pose.

Also, in operation S120, hierarchical nonlinear optimization may be performed. Estimating two unknowns, a normal and an albedo, from reflected irradiance is severely ill-posed like other SfS methods. To solve a nonlinear optimization problem of inverse rendering using a GPU-based Gauss-Newton optimization that sequentially computes two sparse matrix-vector (SpMV) multiplication kernels, the present invention formulates a total energy function that seeks an optimal depth and albedo x = {$\hat{D}$, a}.

When input color/depth frame is given, three different unknowns, that is, an albedo, a normal, and an illumination, need to be estimated simultaneously. Therefore, the present invention solves this SfS problem through two-stage optimization of estimating (1) the illumination and (2) the normal and the albedo and repeats the same from the coarsest level to the finest level. To estimate the illumination at a coarsest level of a first frame, the reflected irradiance $B^t$ in Equation 1 is computed with initial surface normals acquired from a current depth map and an initial diffuse albedo, set to uniform albedos, which is an averaged albedo of the color frame. To estimate albedos and normals in a level, the optimized illumination is used. From a subsequent finer level, previous results of albedos and normals are used for illumination estimation. The enhanced illumination is used for finer optimization of albedos and normals. From a second frame, previously optimized albedo results are used for optimization of normals and albedos at the coarsest level. Others are processed in the same manner as in the first frame.

In operation S130, the depth value is integrated to the volumetric distance filed and the photometric normal and the diffuse albedo are refined in real time through geometry-aware texture warping and blended in the texture space (second stage and third stage). By performing 3D scanning in real time, high-resolution 3D geometry and texture may be acquired from RGB-D stream data.

In operation S130, the real-time multiview SfS may be achieved by progressively refining a geometry registration between the texture space and the volumetric distance field using a normal texture. Here, in operation S130, a geometry correspondence between normals in the texture space and geometry in a canonical space of a TSDF may be optimized.

Describing operation S130 in detail below, the inverse rendering stage of the present invention decomposes input depth and color images of a current frame into four different attributes, that is, a refined depth, a diffuse albedo, a surface normal, and an illumination. The refined depth value is integrated to the canonical space of TSDF. The surface normal and the diffuse albedo are stored as a normal map and an albedo tile texture map, respectively. Such high-resolution texture maps are associated with a voxel grid of a signed distance field. Here, a fusion method disclosed herein inherits a data structure of a real-time texture scanning method. For example, referring to FIG. 3, albedos, normals, and geometry accumulated up to a previous frame (t-1) are updated using an output from the inverse rendering stage, for example, (1) geometry update and texture transfer, (2) geometry-aware texture warping, and (3) normal/albedo blending.

Once a depth is refined through coarse-to-fine inverse rendering, the depth value is integrated to the canonical space of TSDF and geometry of a current frame is updated. However, this geometry update breaks a relationship between the geometry in the canonical space and the associated texture maps. Therefore, a previous texture is transferred to the updated geometry by projecting the previous texture to a current texture in a normal orientation of the updated geometry through ray casting. Dissimilar to the existing texture fusion method, the method of the present invention needs to transfer not only the albedo but also a normal texture. Since the normal is a directional attribute, rotation needs to be considered when transferring the normal.

Initially, the present invention finds a correspondence between previous normals $n^{t-1}$ and $n^t$. The present invention computes a rotation matrix of R using Rodrigues' rotation formula as follows:

$$\mathbf{R} = \mathbf{I} + [\mathbf{v}]_\times + [\mathbf{v}]_\times^2 \frac{1-c}{s^2}$$

. Here, $v = n^{t-1} \times n^t$, $[v]_x$ denotes a skew symmetric matrix of v, and $c=n^{t-1}$. Also, $n^t$ denotes cosine of an angle between two normal vectors and $s= ||v||$ denotes sine of the angle between two normal vectors.

In operation S130, geometry-aware texture mapping may be performed. In regard to a depth vs. geometry, in a standard fusion framework, a camera pose per frame needs to be estimated using depth information through ICP. Depth frames are aligned with respect to intermediate geometry in the canonical space. Here, an inevitable camera pose error occurs due to imperfectness of the progressively estimated geometry and noise in a depth map. As a result, input depth values are inaccurately projected in subsequent frames. This error has been mitigated using the TSDF in the voxel grid. However, geometry results tend to be smoothed.

In regard to color vs. geometry, attention need to be paid to an aspect that an unavoidable geometric registration error causes a mismatch between color frames and the intermediate geometry (even with a perfectly synchronized camera). When resolving a mismatch problem between color frames and the intermediate geometry (accumulated from erroneous depth frames), there is no direct correspondence between appearance and geometry.

Such a mismatching problem has been tackled by offline optimization, exhaustively generating synthetic textures or is not even explicitly handled, potentially including mismatch errors between the texture and geometry. Enhancing 3D geometry using SfS requires an ideal registration of a captured shading normal to the base geometry. The existing work may align only a group of textures regardless of geometry due to a lack of the constraint for image-to- geometry alignment. It suffers from wrong projection of textures.

In contrast, the present invention additionally optimizes a geometry correspondence between normals in the texture space and geometry in the canonical space of TSDF by formulating an energy optimization problem as follows:

[Equation 7]

$$E(\mathcal{W}^t) = \lambda_{\text{nwarp}} E_{\text{nwarp}} + \lambda_{\text{cwarp}} E_{\text{cwarp}}$$

In Equation 7, W denotes a set of spatially-varying warp functions, $E_{\text{nwarp}}$ denotes normal-based energy, $E_{\text{cwarp}}$ denotes color-based energy, and $\lambda_{\text{nwarp}}$ and $\lambda_{\text{cwarp}}$ denote corresponding weights, respectively.

In particular, novel normal-based energy $E_{\text{nwarp}}$ applies current texture normal map $\hat{N}$ to the surface normal of canonical geometry $\tilde{N}$ through local grid window $\Omega$ based on a grid-based warping method. This energy term may suppress misalignment between two different normals.

[Equation 8]

$$E_{\text{nwarp}} = \sum_{\mathbf{z} \in \Omega(\mathbf{u})} \omega(\mathbf{z}) \left\| \hat{N}(\pi(\mathbf{W}(\mathbf{u})\mathbf{T}\tilde{V}(\mathbf{z}))) - \tilde{N}(\mathbf{z}) \right\|^2$$

In Equation 8, z denotes a pixel within the local grid window $\Omega(u)$. Also, $\tilde{V}$ denotes a 3D vertex map of the canonical geometry in a camera space, T denotes an extrinsic camera transformation, $\pi$ denotes a camera projection matrix, and $\omega$ denotes a Gaussian weight $\omega(z) = \exp(-\|u - z\|^2)/\sigma)$ with a spatial parameter $\sigma$ to control regularity of an estimated camera motion. Also, W denotes an unknown spatially-varying warping field in a matrix form at grid node u.

The present invention estimates camera motion W at each regular lattice grid u at each level and then interpolates the same through Gaussian weight $\omega$ for every pixel. The present invention finds that three levels are sufficient and that a width between grid points is set to 64 pixels. Therefore, the present invention optimizes energy W with a weight decrease. Attention needs to be paid to an aspect that normals from the canonical space $\tilde{N}$ have less details of normals from SfS. To match a level of details in optimization, the present invention applies a low-pass filter to a high-detail normal from SfS $\tilde{N}$.

In the case of a color texture, color-based energy $E_{\text{cwarp}}$ to apply photometric consistency of current color frame C to rendering reflected irradiance image $B^t$ through the local window is included.

[Equation 9]

$$E_{\text{cwarp}} = \sum_{\mathbf{z} \in \Omega(\mathbf{u})} \omega(\mathbf{z}) \left\| Y(C(\pi(\mathbf{W}(\mathbf{u})\mathbf{T}\tilde{V}(\mathbf{z})))) - Y(\dot{B}(\mathbf{z})) \right\|^2$$

In Equation 9, $\dot{B}$ denotes a reflected irradiance image with a current camera motion using newly updated geometry with the transferred normal texture and albedo texture.

In operation S 130, the photometric normal and the albedo may be blended. Once the spatially-varying warp function $W^t$ is known, the present invention is ready to blend normals $\hat{N}^t$ with the transferred normals $\dot{N}^t$. in the current frame t to the canonical texture space $\bar{N}^t$. For each texel of 3D point p in the canonical space of TSDF, a spatial resolution and a registration certainty of each image pixel are evaluated by computing a blending weight as follows:

[Equation 10]

$$\bar{N}^t(\mathbf{p}) = \frac{\Psi^{t-1}(\mathbf{p})\dot{N}^t(\mathbf{p}) + \psi(\mathbf{p})\hat{N}^t(\tilde{\mathbf{u}})}{\Psi^{t-1}(\mathbf{p}) + \psi(\mathbf{p})}$$

In Equation 10, $\tilde{u}$ denotes a pixel corresponding to point p through the warping function W in the current frame t. Also, weight W denotes an accumulated weight for normal/albedo blending in the current frame. Here, $\psi^t(p) = \min(\psi^{t-1}(p) + \psi(p), \psi_{max})$. Here, $\psi_{max}$ denotes a predefined parameter that controls an upper bound of the blending weight, and $\psi(p)$ denotes the blending weight for a given camera pose. The blending weight $\psi(p)$ may be computed by considering an area size, a camera angle, and occlusion according to a weight formula $\psi(p) = \psi_{area}(p) \cdot \psi_{angle}(p) \cdot \psi_{occ}(p)$.

Accordingly, referring to FIG. 4, the present invention may decompose camera signals to photometric normals and accumulate the same in a texture space associated with a voxel grid of a TSDF, enabling high-resolution geometry in real time.

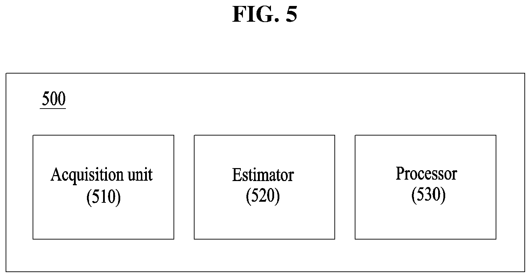

FIG. 5 is a diagram illustrating a configuration of a 3D scanning system according to an example embodiment.

Referring to FIG. 5, a 3D scanning system 500 according to an example embodiment may acquire high-resolution 3D geometry and texture from RGB-D stream data by performing a process of acquiring high-detail geometry through connection of a volumetric fusion and multiview SfS in two stages.

To this end, the 3D scanning system 500 may include an acquisition unit 510, an estimator 520, and a processor 530.

The acquisition unit 510 may estimate an illumination and acquire a scalar depth value, and the estimator 520 may estimate a photometric normal and a diffuse albedo using the scalar depth value acquired from the estimated illumination.

The acquisition unit 510 may estimate the illumination using a spherical harmonics coefficient and the estimator 520 may estimate the photometric normal and the diffuse albedo using multiview SfS. In detail, the acquisition unit 510 may acquire color and depth streams as an input using an RGB-D camera under the unknown illumination and may estimate an approximate value of the illumination using the spherical harmonics coefficient. Therefore, the estimator 520 may estimate the photometric normal and the diffuse albedo through iterative optimization.

Also, the estimator 520 may estimate the photometric normal by optimizing a depth value and may optimize the depth value and the diffuse albedo by minimizing an energy function.

The processor 530 may integrate the depth value to a volumetric distance filed and may refine the photometric normal and the diffuse albedo in real time through geometry-aware texture warping and may blend the photometric normal and the diffuse albedo in the texture space.

The processor 530 may achieve real-time multiview SfS by progressively refining a geometry registration between the texture space and the volumetric distance field using a normal texture. Here, the processor 530 may optimize a geometry correspondence between normals in the texture space and geometry in a canonical space of a TSDF.

As described above, high-resolution 3D geometry and texture may be acquired from RGB-D stream data by performing 3D scanning in real time.

Although description is omitted in the 3D scanning system of FIG. 5, it is apparent to one skilled in the art that each component of FIG. 5 may include all the contents described with reference to FIGS. 1 to 4.

The systems and/or apparatuses described herein may be implemented using hardware components, software components, and/or a combination thereof. For example, apparatuses and components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. A processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable storage mediums.

The methods according to the example embodiments may be recorded in non-transitory computer-readable media including program instructions to implement various operations embodied by a computer. Also, the media may include, alone or in combination with the program instructions, data files, data structures, and the like. Program instructions stored in the media may be those specially designed and constructed for the example embodiments, or they may be well-known and available to those having skill in the computer software arts. Examples of non-transitory computer-readable media may include magnetic media such as hard disks, floppy disks, and magnetic tapes; optical media such as CD ROM disks and DVDs; magneto-optical media such as floptical disks; and hardware devices that are specially to store and perform program instructions, such as read-only memory (ROM), random access memory (RAM), flash memory, and the like. Examples of program instructions include both machine code, such as produced by a compiler, and files containing higher level code that may be executed by the computer using an interpreter. The hardware device may be configured to act as at least one software module to perform an operation of example embodiments, or vice versa.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A three-dimensional (3D) scanning method comprising:
   acquiring high-detail geometry by integrating a volumetric fusion and multiview shape-from-shading (SfS).

2. The 3D scanning method of claim 1, wherein high-resolution geometry and texture are acquired from RGB-D stream data by performing the acquiring in real time.

3. The 3D scanning method of claim 1, wherein the acquiring comprises:

   a first stage of estimating an illumination and acquiring a scalar depth value;
   a second stage of estimating a photometric normal and a diffuse albedo using the scalar depth value acquired from the estimated illumination; and
   a third stage of integrating the scalar depth value to a volumetric distance field, refining the photometric normal and the diffuse albedo, and blending the photometric normal and the diffuse albedo in a texture space.

4. The 3D scanning method of claim 3, wherein the first stage comprises estimating the illumination based on an input of a color and a depth stream acquired using an RGB-D camera.

5. The 3D scanning method of claim 5, wherein the third stage comprises refining the photometric normal and the diffuse albedo in real time through geometry-aware texture warping and blending the photometric normal and the diffuse albedo in the texture space.

6. The 3D scanning method of claim 3, wherein the second stage comprises estimating the photometric normal and the diffuse albedo using the scalar depth value acquired from the estimated illumination and the multiview SfS.

7. The 3D scanning method of claim 6, wherein the second stage comprises acquiring a color and a depth stream as an input using an RGB-D camera under the illumination and estimating an approximate value to the illumination using a spherical harmonics coefficient.

8. The 3D scanning method of claim 3, wherein the second stage estimating the photometric normal and the diffuse albedo through iterative optimization.

9. The 3D scanning method of claim 8, wherein the second stage comprises:

   estimating the photometric normal by optimizing the scalar depth value and optimizing the scalar depth value and the diffuse albedo by minimizing an energy function; and
   minimizing the energy function as follows:

   [Equation]

   $$E(\hat{D}, \mathbf{a}) = E_{\text{data}} + \lambda_{\text{dreg}} E_{\text{dreg}} + \lambda_{\text{dsensor}} E_{\text{dsensor}}$$
   $$+ \lambda_{\text{areg}} E_{\text{areg}} + \lambda_{\text{atemp}} E_{\text{atemp}}$$

   where $E_{\text{data}}$ denotes shading data, $E_{\text{dreg}}$ denotes a spatial regularization, $E_{\text{dsensor}}$ denotes a depth constraint, $\lambda_{\text{dreg}}$ and $\lambda_{\text{dsensor}}$ denote corresponding weights for depth regularization and constraint, respectively, $E_{\text{areg}}$ and $E_{\text{atemp}}$ denote spatial and temporal regularizers of albedo, respectively, and $\lambda_{\text{areg}}$ and $\lambda_{\text{atemp}}$ denote corresponding weights for albedo regularizers, respectively.

10. The 3D scanning method of claim 3, wherein the third stage comprises achieving real-time multiview SfS by progressively refining a geometry registration between the texture space and the volumetric distance field using a normal texture.

11. The 3D scanning method of claim 10, wherein the third stage comprises optimizing a geometry correspondence between normals in the texture space and geometry in a canonical space of a truncated signed distance function (TSDF).

12. A three-dimensional (3D) scanning method for acquiring high-detail geometry by integrating a volumetric fusion and multiview shape-from-shading (SfS), the 3D scanning method comprising:

estimating an illumination and acquiring a scalar depth value;
estimating a photometric normal and a diffuse albedo using the scalar depth value acquired from the estimated illumination;
integrating the scalar depth value to a volumetric distance field; and
performing real-time multiview SfS on the photometric normal and the diffuse albedo through a geometry registration between a texture space and the volumetric distance field using a normal texture,
wherein high-resolution geometry and texture are acquired from RGB-D stream data by performing 3D scanning in real time.

13. The 3D scanning method of claim 12, wherein the integrating comprises integrating the scalar depth value to a canonical space of a truncated signed distance function (TSDF) by refining a depth through inverse rendering.

14. A three-dimensional (3D) scanning system for acquiring high-detail geometry by integrating a volumetric fusion and multiview shape-from-shading (SfS), the 3D scanning system comprising:

an acquisition unit configured to estimate an illumination and to acquire a scalar depth value;
an estimator configured to estimate a photometric normal and a diffuse albedo using the scalar depth value acquired from the estimated illumination; and
a processor configured to integrate the scalar depth value to a volumetric distance field, to refine the photometric normal and the diffuse albedo, and to blend the photometric normal and the diffuse albedo in a texture space,
wherein high-resolution geometry and texture are acquired from RGB-D stream data by performing 3D scanning in real time.

15. The 3D scanning system of claim 14, wherein the acquisition unit is configured to estimate the illumination based on an input of a color and a depth stream acquired using an RGB-D camera.

16. The 3D scanning system of claim 14, wherein the processor is configured to refine the photometric normal and the diffuse albedo in real time through geometry-aware texture warping and to blend the photometric normal and the diffuse albedo in the texture space.

17. The 3D scanning system of claim 14, wherein the estimator is configured to estimate the photometric normal and the diffuse albedo using the scalar depth value acquired from the estimated illumination and the multiview SfS.

18. The 3D scanning system of claim 14, wherein the estimator is configured to,

estimate the photometric normal and the albedo through iterative optimization,
estimate the photometric normal by optimizing the scalar depth value and optimize the scalar depth value and the diffuse albedo by minimizing an energy function, and
minimize the energy function as follows:

[Equation]

$$E(\hat{D}, \mathbf{a}) = E_{\text{data}} + \lambda_{\text{dreg}} E_{\text{dreg}} + \lambda_{\text{dsensor}} E_{\text{dsensor}} + \lambda_{\text{areg}} E_{\text{areg}} + \lambda_{\text{atemp}} E_{\text{atemp}}$$

where $E_{\text{data}}$ denotes shading data, $E_{\text{dreg}}$ denotes a spatial regularization, $E_{\text{dsensor}}$ denotes a depth constraint, $\lambda_{\text{dreg}}$ and $\lambda_{\text{dsensor}}$ denote corresponding weights for depth regularization and constraint, respectively, $E_{\text{areg}}$ and $E_{\text{atemp}}$ denote spatial and temporal regularizers of albedo, respectively, and $\lambda_{\text{areg}}$ and $\lambda_{\text{atemp}}$ denote corre-

sponding weights for albedo regularizers, respectively.

**19.** The 3D scanning system of claim 14, wherein the processor is configured to achieve real-time multiview SfS by progressively refining a geometry registration between the texture space and the volumetric distance field using a normal texture.

**20.** The 3D scanning system of claim 19, wherein the processor is configured to optimize a geometry correspondence between normals in the texture space and geometry in a canonical space of a truncated signed distance function (TSDF).

# FIG. 1

```
        ┌─────────────┐
        │    Start     │
        └──────┬──────┘
               │
               ▼
┌──────────────────────────────────────────────┐
│  Estimate illumination and acquire scalar      │ ── S110
│             depth value                        │
└──────────────────┬───────────────────────────┘
                   │
                   ▼
┌──────────────────────────────────────────────┐
│  Estimate photometric normal and diffuse       │
│  albedo using scalar depth value acquired      │ ── S120
│        from estimated illumination             │
└──────────────────┬───────────────────────────┘
                   │
                   ▼
┌──────────────────────────────────────────────┐
│  Integrate scalar depth value to volumetric    │
│  distance filed, refine photometric normal     │
│  and diffuse albedo, and blend photometric     │ ── S130
│   normal and diffuse albedo in texture space   │
└──────────────────┬───────────────────────────┘
                   │
                   ▼
        ┌─────────────┐
        │     End      │
        └─────────────┘
```

**FIG. 2**

**FIG. 3**

Input (t): $D^t$  $C^t$

D : depth    A : albedo    $\mathcal{L}$ : illumination
C : color    N : normal    $\mathcal{M}$ : geometry
                            W: warp matrix

Inverse rendering: $\hat{D}^t$  $\hat{A}^t$  $\hat{N}^t$  $\hat{\mathcal{L}}^t$

Frame (t-1): $\bar{A}^{t-1}$  $\mathcal{M}^{t-1}$  $\bar{N}^{t-1}$

Geometry integrate & texture transfer

Warp calculation  $W^t$

Blending

Frame (t): $\bar{A}^t$  $\mathcal{M}^t$  $\bar{N}^t$

# FIG. 4

Conventional fusion          Our normal fusion

**FIG. 5**

500

| Acquisition unit (510) | Estimator (520) | Processor (530) |

## INTERNATIONAL SEARCH REPORT

| | International application No. |
|---|---|
| | **PCT/KR2023/001925** |

**A.      CLASSIFICATION OF SUBJECT MATTER**

**G01B 11/25**(2006.01)i; **G01B 11/02**(2006.01)i; **G06T 7/50**(2017.01)i; **G06T 7/90**(2017.01)i; **G06T 17/30**(2006.01)i

According to International Patent Classification (IPC) or to both national classification and IPC

**B.      FIELDS SEARCHED**

Minimum documentation searched (classification system followed by classification symbols)

G01B 11/25(2006.01); G06T 1/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 볼륨메트릭 융합(volumetric fusion), 멀티뷰 SfS(multiview SfS), 그림자(shade), 복원(reconstruction)

**C.      DOCUMENTS CONSIDERED TO BE RELEVANT**

| Category* | Citation of document, with indication, where appropriate, of the relevant passages | Relevant to claim No. |
|---|---|---|
| X | HA et al. NormalFusion: Real-Time Acquisition of Surface Normals for High-Resolution RGB-D Scanning. In: Proceedings of the IEEE/CVF Conference on Computer Vision and Pattern Recognition (CVPR). 19 June 2021, pp. 15970-15979.<br>    See entire document.<br>    This document is a document 'declaring exceptions to lack of novelty' in an earlier application that serves as a basis for claiming priority of the present international application. | 1-20 |
| Y | ZOLLHOFER et al. Shading-based refinement on volumetric signed distance functions. In: ACM Transactions on Graphics (TOG). 27 July 2015, Vol. 34, No. 4, pp. 1-14.<br>    See pages 4 and 5. | 1,2 |
| Y | MAURER et al. Combining shape from shading and stereo: A joint variational method for estimating depth, illumination and albedo. International Journal of Computer Vision. 27 March 2018, vol. 126, pp. 1342-1366.<br>    See pages 1344 and 1357. | 1,2 |
| A | LEE et al. Texturefusion: High-quality texture acquisition for real-time rgb-d scanning. In: Proceedings of the IEEE/CVF Conference on Computer Vision and Pattern Recognition. 17 July 2020, pp. 1272-1280.<br>    See pages 1272-1274. | 1-20 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 May 2023** | **26 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/001925**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2020-0040194 A (KOREA ADVANCED INSTITUTE OF SCIENCE AND TECHNOLOGY) 17 April 2020 (2020-04-17)<br>     See claims 1 and 2. | 1-20 |

Form PCT/ISA/210 (second sheet) (July 2022)

**INTERNATIONAL SEARCH REPORT**
Information on patent family members

International application No.

**PCT/KR2023/001925**

| Patent document cited in search report | | | Publication date (day/month/year) | Patent family member(s) | | | Publication date (day/month/year) |
|---|---|---|---|---|---|---|---|
| KR | 10-2020-0040194 | A | 17 April 2020 | EP | 3664039 | A1 | 10 June 2020 |
| | | | | US | 11380056 | B2 | 05 July 2022 |
| | | | | US | 2021-0358211 | A1 | 18 November 2021 |
| | | | | WO | 2020-076026 | A1 | 16 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Improved reconstruction of deforming surfaces by cancelling ambient occlusion. **THABO BEELER ; DEREK BRADLEY ; HENNING ZIMMER ; MARKUS GROSS.** European Conference on Computer Vision. Springer, 2012, 30-43